# FASCICULE DE BREVET EUROPEEN

(11) **EP 2 052 967 B1**
(45) Date de publication et mention de la délivrance du brevet: **05.05.2010**
(21) Numéro de dépôt: 08017873.4
(22) Date de dépôt: 13.10.2008
(51) Int. Cl.: B64C 27/04, B64C 27/12, B64C 27/10, B64D 33/02, B64D 35/02, F02C 3/10

(54) **Amélioration aux giravions équipés de turbomoteurs**
Verbesserung an Drehflügelflugzeugen, die mit Turbotriebwerken ausgestattet sind
Improvement for rotorcraft equipped with turboshaft engines

(30) Priorité: 26.10.2007 FR 0707547
(43) Date de publication de la demande: 29.04.2009
(73) Titulaire: EUROCOPTER, 13725 Marignane Cédex (FR)
(72) Inventeur: Certain, Bernard, 13090 Aix en Provence (FR)
(74) Mandataire: GPI & Associés

(56) Documents cités:
- EP-A- 0 282 784
- EP-A- 1 362 984
- EP-A- 1 712 761
- US-A- 2 923 128
- US-A- 3 002 710
- US-A- 3 195 349
- US-A- 3 255 825
- US-A- 3 548 597
- US-A- 4 811 627
- US-A1- 2006 016 197
- US-B1- 6 308 512

## Description

La présente invention est relative à des améliorations apportées aux giravions qui sont équipés d'un ou plusieurs turbomoteur(s).

Le domaine technique de l'invention est celui de la fabrication de giravions, par exemple d'hélicoptères,

Un giravion comporte au moins un rotor équipé de pales, parfois qualifié de rotor principal, et dont la rotation permet la sustentation et le déplacement du giravion.

Un giravion comporte également un, deux, ou trois turbomoteurs servant à entrainer le rotor principal, le cas échéant un rotor anti-couple, et divers accessoires (alternateur et pompe(s) notamment).

Un mécanisme de transmission, parfois qualifié de boite de transmission principale - ci après BTP -, relie à cet effet un arbre de sortie du turbomoteur à l'arbre du rotor principal, ce mécanisme comportant notamment un réducteur de vitesse. De tels mécanismes sont par exemple décrits dans les brevets US 3002710, US 3255825 et US 4811627.

Chaque turbomoteur comporte un compresseur axial et/ou centrifuge, qui comporte généralement plusieurs roues formant autant d'étages de compression, ainsi qu'une première turbine solidaire (en rotation) du compresseur ; le turbomoteur comporte également une seconde turbine - dite turbine de puissance ou turbine libre - qui s'étend en aval de la première turbines - par référence au sens d'écoulement des gaz dans le moteur -, généralement coaxialement à celle-ci.

La turbine libre, qui est montée libre en rotation par rapport à la première turbine, transforme la poussée qu'exercent les gaz sur ses aubes en couple mécanique « moteur », ce couple moteur est transmis par l'arbre de la turbine libre, puis par un réducteur de vitesse généralement intégré au turbomoteur, et par un arbre de sortie du turbomoteur qui peut s'étendre latéralement et extérieurement à celui-ci, par exemple parallèlement à l'axe commun de rotation du compresseur et des première et deuxième turbines.

Les documents EP 0 282 784, US 2 923 128 et US 3 195 349 décrivent diverses réalisations de ce type de turbomoteur.

Le document EP 1 362 984 décrit un turbomoteur, à échangeur de chaleur, dans lequel un premier compresseur interne est entraîné par une première turbine, tandis qu'une boîte de vitesses qui entraîne une série d'arbres, permet à une seconde turbine d'entraîner un second compresseur interne.

Le document US 6 308 512 décrit un système de compression pour turbomoteur avec un compresseur, des premier et second compresseurs auxiliaires prévus pour être intégrés au turbomoteur.

Le document EP 1 712 761 décrit un turbomoteur à arbres dédoublés et couplés électriquement, pour hélicoptère. Une machine électrique à faible vitesse est reliée à un arbre du turbomoteur, et un compresseur interne est monté sur un troisième arbre, sur lequel est agencé une troisième machine électrique fonctionnant en tant que moteur ou génératrice.

La puissance motrice nécessaire à l'entrainement d'un giravion varie grandement selon les performances attendues pour le giravion et selon l'environnement, notamment selon la vitesse de translation du giravion, la masse embarquée, la température ambiante, la pression atmosphérique et/ou l'altitude.

Par ailleurs, la puissance fournie par un turbomoteur varie de façon importante selon la pression atmosphérique et/ou l'altitude notamment.

L'adaptation d'un hélicoptère existant à des besoins/missions nécessitant une puissance augmentée peut être obtenue, dans une certaine mesure et dans certains cas, en ajoutant un turbomoteur et en modifiant en conséquence le mécanisme de transmission de puissance ; ceci nécessite cependant, pour la modification du mécanisme de transmission, une conception, un développement, et des essais spécifiques qui sont longs et couteux.

Ceci tend par ailleurs à prévoir des turbomoteurs de puissance unitaire moindre, dont la consommation spécifique de carburant est malheureusement supérieure à celle des turbomoteurs de puissance unitaire supérieure.

Par ailleurs, la conception, le développement et les essais d'un turbomoteur de puissance adaptée, en particulier accrue, sont également très longs et couteux.

Un objectif de l'invention qui est définie par les revendications, est de proposer un remède -partiel au moins- à cette situation.

Selon un aspect de l'invention, il est proposé d'équiper un giravion d'un compresseur externe d'air supplémentaire, séparé du - externe au - turbomoteur, ainsi qu'un conduit de transport d'air reliant la sortie du compresseur externe à l'entrée du turbomoteur pour délivrer en entrée du turbomoteur de l'air comprimé par le compresseur externe.

L'invention permet d'augmenter la puissance mécanique fournie par le(s) turbomoteur(s), sans modifier le(s) turbomoteur(s), grâce à l'augmentation de la pression d'air obtenue en entrée du compresseur interne intégré au(x) turbomoteur(s), qui est réalisée par le compresseur externe extérieur au(x) turbomoteur(s).

De préférence, le compresseur externe présente, dans des conditions normales de température et de pression, pour sa vitesse nominale de rotation, un taux de compression situé dans une plage allant de 1.01 environ à 2 environ, en particulier situé dans une plage allant de 1.05 environ à 1.5 environ.

Selon un mode préféré de réalisation, le compresseur externe comporte une seule roue mobile à aubes, i.e. un seul étage, de type roue axiale. Selon d'autres modes de réalisation, le compresseur externe peut comporter plusieurs roues axiales et/ou centrifuges, i.e. plusieurs étages.

La (ou les) roue(s) du compresseur externe peu(ven)t comporter un dispositif de variation de l'orientation des aubes permettant de faire varier le niveau de compression obtenu.

Le compresseur externe est agencé pour être entrainé par le mécanisme principal de transmission (BTP) du giravion, à savoir par un arbre mû par ladite BTP entraîné par la turbine libre, ou bien peut être agencé pour être entrainé par un moteur électrique alimenté en énergie, par l'intermédiaire d'un générateur -tel qu'un alternateur- et d'une batterie, par la BTP.

Dans ce dernier cas notamment, le compresseur externe peut comporter un dispositif de variation de sa vitesse de rotation permettant également de faire varier le niveau de compression obtenu.

De préférence également, le giravion comporte en outre un échangeur de chaleur disposé dans le conduit de transport d'air reliant le compresseur externe au turbomoteur ; l'échangeur de chaleur est relié à un circuit de transport d'un fluide (eau, air, huile, ou fluide frigorigène), la circulation de ce fluide dans l'échangeur permettant de refroidir l'air comprimé par le compresseur externe.

Selon une réalisation, le turbomoteur peut comporter deux arbres de sortie : un premier arbre, qui peut être coaxial à l'arbre commun au compresseur interne et à la première turbine du turbomoteur, et qui peut s'étendre à l'intérieur de l'arbre commun, peut servir à l'entrainement d'une hélice de propulsion et/ou du compresseur externe; un second arbre sert à l'entrainement du rotor principal du giravion par l'intermédiaire du mécanisme BTP.

Notamment lorsque le compresseur externe est entrainé par la BTP, il peut être situé en avant de celle-ci, par référence au sens d'avance du giravion. A contrario, notamment lorsque le compresseur externe est entrainé par un arbre de sortie du turbomoteur, il peut être situé en arrière de la BTP.

Un giravion comportant deux turbomoteurs peut comporter un seul compresseur externe délivrant de l'air pressurisé aux deux turbomoteurs,
ou bien deux compresseurs externes alimentant respectivement les deux turbomoteurs.

Dans les deux cas, l'air comprimé par le(s) compresseur(s) externe(s) peut être délivré aux deux - ou bien à un seul des deux - turbomoreurs.

A cet effet, un registre motorisé peut être disposé dans le(s) conduit(s) de transport d'air reliant le(s) compresseur(s) externe(s) aux turbomoteurs.

L'invention permet de réduire la consommation spécifique d'un giravion en régime de croisière.

L'invention propose un système simple, peu couteux et peu encombrant, qui permet d'augmenter la puissance motrice fournie par un turbomoteur de giravion.

D'autres aspects, caractéristiques, et avantages de l'invention apparaissent dans la description suivante, qui se réfère aux dessins annexés et qui illustré, sans aucun caractère limitatif, des modes préférés de réalisation de l'invention.

La figure 1 est un schéma simplifié illustrant un turbomoteur de giravion et un compresseur externe de « suralimentation » de ce turbomoteur, qui est entrainé par le turbomoteur.

La figure 2 illustre schématiquement, en vue de dessus, un giravion équipé de deux turbomoteurs et d'un compresseur externe de pressurisation commun aux turbomoteurs, selon une forme de réalisation de l'invention.

La figure 3 illustre schématiquement, en vue de côté, un autre giravion

La figure 4 illustre schématiquement, en vue de dessus, un autre giravion équipé de deux turbomoteurs et de deux compresseurs externes.

La figure 5 illustre schématiquement, en vue en perspective, un mécanisme de transmission de puissance entre deux arbres de sortie respectifs de deux turbomoteurs (non représentés) et un rotor de sustentation du giravion, ainsi que deux compresseurs externes et leurs mécanismes respectifs d'entrainement par les turbomoteurs.

La figure 6 illustre schématiquement, en vue en perspective, l'implantation de deux compresseurs externes dans deux conduits d'alimentation en air de deux turbomoteurs d'un giravion.

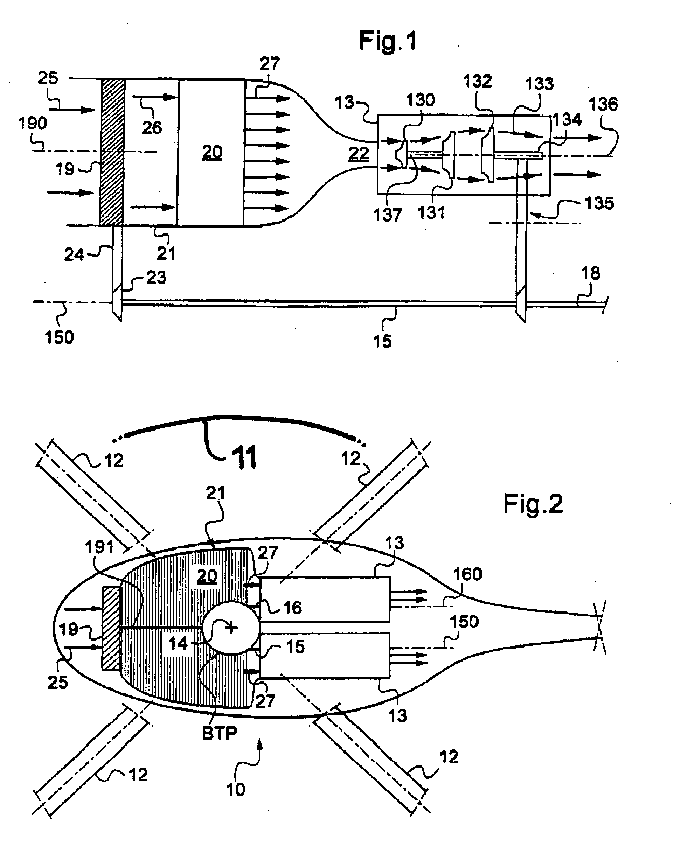

Par référence aux figures 2 à 6, l'invention concerne les hélicoptères 10 et autres giravions dont au moins un rotor 11 d'avance et de sustentation, qui est équipé de pales 12, est entrainé en rotation selon un axe 14 sensiblement vertical, par un ou plusieurs turbomoteurs 13.

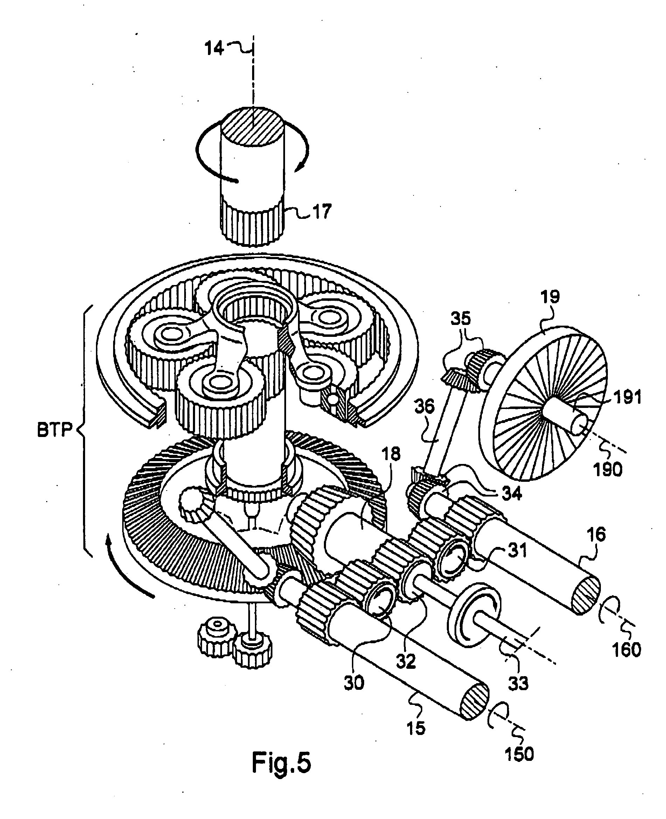

Une boite de transmission principale - BTP - relie à cet effet un arbre 15, 16 de sortie de chaque turbomoteur à l'arbre 17 du rotor principal 11, ce mécanisme comportant notamment un réducteur de vitesse (cf. figure 5).

Comme illustré figure 1, chaque turbomoteur comporte un compresseur interne 130 et une première turbine 131 solidaire en rotation du compresseur interne 130 ; le turbomoteur comporte également une turbine libre 132 qui s'étend en aval de la première turbine par référence au sens 133 d'écoulement des gaz dans le moteur.

La turbine libre produit un couple moteur qui est transmis par l'arbre 134 de la turbine libre, puis par un réducteur 135 de vitesse et par un arbre 15 de sortie du turbomoteur qui s'étend latéralement et extérieurement à celui-ci, selon un axe 150 parallèle à l'axe 136 commun de rotation du compresseur interne 130 et des première et deuxième turbines 131, 132.

Le(s) turbomoteur(s) 13 entraine(nt) ainsi un arbre 18 (figures 1, 3, 5) d'entrée de la BTP.

Le système d'augmentation de puissance illustré figure 1 comporte un compresseur externe 19 d'air, distinct du turbomoteur, et un refroidisseur 20 d'air disposés successivement dans cet ordre dans un conduit 21 de transport d'air qui relie le compresseur externe 19 à l'entrée d'air 22 du turbomoteur 13.

Le compresseur externe 19 comporte une roue à aubes montée rotative selon un axe 190 et entrainée en rotation par l'arbre 15, par l'intermédiaire de pignons 23, 24 respectivement solidaires de l'arbre 15 et de la roue du compresseur externe.

L'air 25 pénétrant dans le conduit 21 traverse le compresseur externe 19 qui le comprime; l'air comprimé 26 sortant du compresseur traverse le refroidisseur 20 qui le refroidit; l'air comprimé refroidi 27 sortant du refroidisseur 20 pénètre dans le turbomoteur 13 par son entrée d'air 22.

Dans le mode de réalisation correspondant à la figure 2, le compresseur externe 19 est entrainé en rotation par un arbre 191 mû par le mécanisme BTP servant à entrainer le rotor principal 11.

Dans cet exemple,le compresseur externe 19 est disposé en avant de la BTP tandis que les deux turbomoteurs 13 sont disposés en arrière de la BTP; le refroidisseur 20 qui est ici un échangeur et le conduit 21 s'étendent pour partie en avant de la BTP, et pour partie de part et d'autre de celle-ci, le conduit 21 reliant le compresseur externe 19 à l'entrée 22 des turbomoteurs 13.

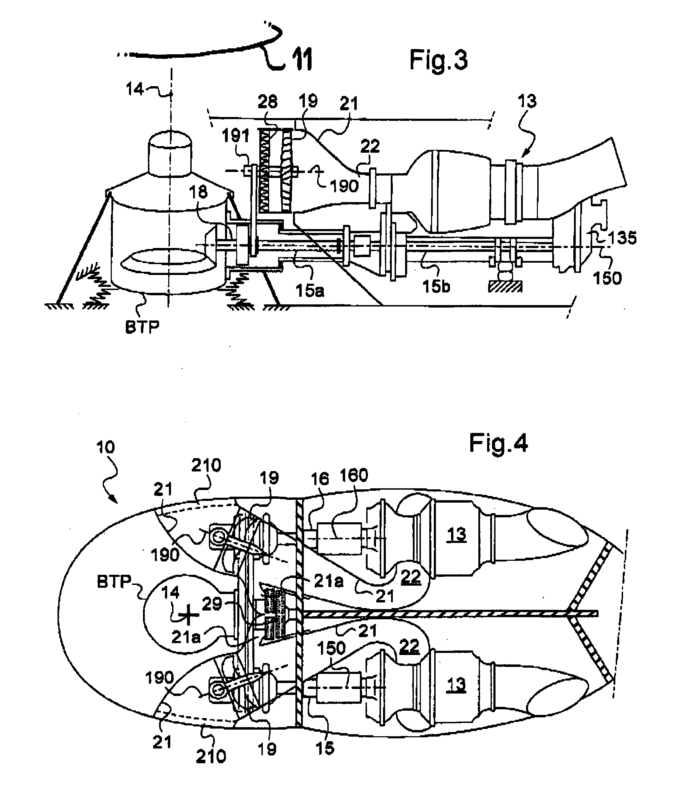

Par référence à la figure 3, deux arbres 15a et 15b d'axe 150 relient la sortie du réducteur 135 de sortie du turbomoteur 13 à l'arbre 18 d'entrée de la BTP. Un système de transmission, symboliquement représenté comme une courroie, relie l'arbre 15a à l'arbre 191 du compresseur externe 19, pour l'entrainement de ce dernier par l'arbre 15a, 15b de sortie du turbomoteur.

La roue à aubes du compresseur externe est disposée en aval d'un filtre ou grille 28 équipant l'entrée d'air du conduit 21.

Dans le mode de réalisation illustré figure 4, les arbres de sortie respectifs 15 et 16 des deux turbomoteurs 13, qui s'étendent respectivement selon deux axes longitudinaux 150, 160 sensiblement parallèles et horizontaux, entrainent chacun un compresseur externe 19.

Les deux compresseurs externe 19 sont disposés de part et d'autre de la BTP, en arrière de celle ci, au voisinage des entrées d'air latérales respectives 210 de deux conduits 21 de transport d'air.

Chaque conduit 21 est muni d'une dérivation 21a permettant de délivrer une partie de l'air comprimé par chaque compresseur externe 19 à un échangeur thermique 29 (radiateur) servant à refroidir un lubrifiant de la BTP.

On observe figure 4 que d'une part les arbres 15, 16 de sortie des turbomoteurs sont « traversants », i.e. s'étendent respectivement selon les axes longitudinaux des compresseurs internes et turbines des turbomoteurs, et que d'autre part les entrées 22 d'air respectives des turbomoteurs sont « tangentielles » ou « latérales ».

Par référence à la figure 5, les arbres 15, 16 respectifs de sortie de deux turbomoteurs entrainent un arbre 18 d'entrée de la BTP par l'intermédiaire de deux pignons 30, 31 engrenant avec les arbres 15, 16 et avec un autre pignon 32 solidaire de l'arbre 18 et d'un arbre 33 d'entrainement d'un rotor anti couple - « rotor de queue » - non représenté.

Un couple de pignons coniques 34 sert à l'entrainement d'un arbre 36 par l'arbre 16, et un autre couple de pignons coniques 35 sert à l'entrainement de l'arbre 191 du compresseur externe 19 par l'arbre 36.

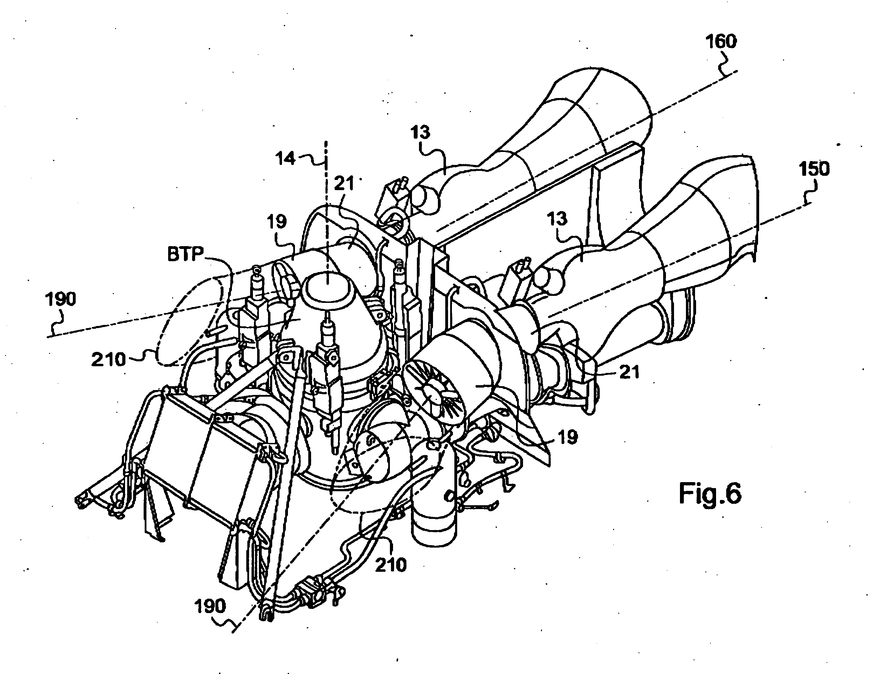

Bien qu'un seul compresseur externe soit représenté figure 5, qui est entrainé par l'arbre 16, on comprend qu'un second compresseur externe peut être entrainé par un dispositif identique au dispositif comportant les éléments 34 à 36, par l'arbre 15, dans le cas d'une configuration identique ou similaire à celles des figures 4 et 6 où le giravion est équipé de deux compresseurs externes 19 dits surpresseurs, de « suralimentation » de deux turbomoteurs ; une partie seulement de ce dispositif est représentée figure 5 pour ne pas l'obscurcir.

La figure 6 illustre partiellement un hélicoptère équipé de deux compresseurs externe 19 disposés dans deux conduits 21 s'étendant à gauche et à droite de la BTP, en avant des turbomoteurs 13.

Selon des variantes non représentées, chaque compresseur externe 19 peut être entrainé en rotation par un moteur électrique à vitesse variable. Par ailleurs, le pas des aubes mobiles du compresseur externe peut être réglable afin de faire varier le taux de compression obtenu.

On comprend que la description qui précède ne peut prétendre à l'exhaustivité et que diverses modifications, adjonctions, ou omissions peuvent être apportées à la présente invention.

## Revendications

1. Giravion (10) comportant un rotor principal (11), un turbomoteur (13) avec au moins une turbine libre (132) reliée à un mécanisme de transmission (BTP) par un arbre (15, 15a, 15b, 16, 18) et pourvue d'une entrée (22) d'air, ledit mécanisme (BTP) de transmission étant couplé au rotor (11) ainsi qu'au turbomoteur (13) pour permettre l'entrainement du rotor par le turbomoteur (13),
**caractérisé en ce que**, la pression de l'ait à ladite entrée (22) est augmentée par un compresseur externe (19) qui est externe au turbomoteur (13) et agencé pour être entrainé par ledit mécanisme de transmission (BTP), à savoir par un arbre (191) mû par ledit mécanisme de transmission (BTP) entraîné par ladite turbine libre (132) ou par un moteur électrique alimenté en énergie par ledit mécanisme de transmission par l'intermédiaire d'un générateur et d'une batterie tandis qu'un conduit (21) de transport d'ait relie ce compresseur externe (19) au turbomoteur pour délivrer l'air comprimé par le compresseur externe (19) à l'entrée (22) du turbomoteur.

2. Giravion (10) selon la revendication 1, dans lequel le compresseur externe (19) est agencé pour être entrainé à l'aide de ladite turbine libre (132), par l'intermédiaire d'un réducteur (135) de vitesse, d'un arbre (15, 15a, 15b, 16, 36), et du mécanisme de transmission (BTP).

3. Giravion (10) selon la revendication 1 ou 2, qui comporte en outre un échangeur de chaleur (20) disposé dans le conduit (21) de transport d'air, entre le compresseur externe (19) et le turbomoteur (13), qui est relié à un circuit de transport de fluide pour refroidir l'air comprimé (26) par le compresseur externe (19).

4. Giravion (10) selon l'une quelconque des revendications 1 à 3, dans lequel le compresseur externe (149) présente, dans des conditions normales de température et de pression, pour sa vitesse nominale de rotation, un taux de compression situé dans une plage allant de 1.01 environ à 2 environ, en particulier situé dans une plage allant de 1.05 environ à 1.5 environ.

5. Giravion (10) selon l'une quelconque des revendications 1 à 4, dans lequel le compresseur externe (19) comporte une seule roue mobile à aubes, i.e. un seul étage, de type roue axiale.

6. Giravion (10) selon l'une quelconque des revendications 1 à 5, dans lequel le compresseur externe (19) comporte une roue mobile à aubes et un dispositif de variation de l'orientation des aubes.

7. Giravion (10) selon l'une quelconque des revendications 1 ou 3 à 6, dans lequel le compresseur externe (19) est agencé pour être entrainé à l'aide d'un moteur électrique alimenté en énergie, par l'intermédiaire d'un alternateur et d'une batterie, par l'intermédiaire du mécanisme de transmission (BTP), et dans lequel le compresseur externe (19) comporte un dispositif de variation de sa vitesse de rotation.

8. Giravion (10) selon l'une quelconque des revendications précédentes, dans lequel le compresseur externe (19) est situé en avant du mécanisme de transmission (BTP), par référence au sens d'avance du giravion (10).

9. Giravion (10) selon l'une quelconque des revendications précédentes, dans lequel le compresseur externe (19) est situé en arrière du mécanisme BTP, par référence au sens d'avance du giravion.

10. Giravion (19) selon l'une quelconque des revendications précédentes, comportant deux turbomoteurs (13) et un seul compresseur externe (19) délivrant de l'air pressurisé à ces deux turbomoteurs.

11. Giravion (10) selon l'une quelconque des revendications 1 à 9, comportant deux turbomoteurs (13) et deux compresseurs (19) externes alimentant respectivement l'un de ces deux turbomoteurs.

12. Giravion (10) selon l'une quelconque des revendications précédentes , comportant deux turbomoteurs, et dans lequel l'air comprimé par le(s) compresseur(s) externe(s) peut être délivré aux deux - ou bien à un seul des deux - turbomoteurs.

13. Giravion selon la revendication 12, comportant un registre motorisé disposé dans le(s) conduit(s) de transport d'air reliant le(s) compresseur(s) externe(s) aux turbomoteurs,

14. Giravion (10) selon la revendication 11, dans lequel les compresseurs externes (19) sont situés de part et d'autre du mécanisme de transmission (BTP).

15. Giravion (10) selon l'une quelconque des revendications 1 à 4 ou 6 à 14, dans lequel le compresseur externe (19) comporte plusieurs roues mobiles.

## Claims

1. Rotorcraft (10) comprising a main rotor (11), a turbine engine (13) with at least one free turbine (132) connected to a transmission mechanism (MGB) by a shaft (15, 15a, 15b, 16, 18) and provided with an air inlet (22), the said transmission mechanism (MGB) being coupled to the rotor (11) and to the turbine engine (13) to enable the rotor to be driven by the turbine engine (13),
**characterised in that** the air pressure at the said inlet (22) is increased by an external compressor (19) which is outside the turbine engine (13) and arranged to be driven by the said transmission mechanism (MGB), namely by a shaft (191) driven by the said transmission mechanism (MGB) driven by the said free turbine (132) or by an electric motor powered by the said transmission mechanism (MGB) via a generator and a battery, while an air-transport duct (21) connects this external compressor (19) to the turbine engine to deliver the air compressed by the external compressor (19) to the inlet (22) of the turbine engine.

2. Rotorcraft (10) according to Claim 1, in which the external compressor (19) is arranged to be driven with the aid of the said free turbine (132), via a speed reducer (135), a shaft (15, 15a, 15b, 16, 36), and the transmission mechanism (MGB).

3. Rotorcraft (10) according to Claim 1 or 2, which further comprises a heat exchanger (20) disposed in the air-transport duct (21) between the external compressor (19) and the turbine engine (13), which is connected to a fluid transport circuit for cooling the air compressed (26) by the external compressor (19).

4. Rotorcraft (10) according to any one of Claims 1 to 3, in which the external compressor (149) has, under normal conditions of temperature and pressure, for its nominal speed of rotation, a compression ratio situated in a range from about 1.01 to about 2, and in particular in a range from about 1.05 to about 1.5.

5. Rotorcraft (10) according to any one of Claims 1 to 4, in which the external compressor (19) comprises only one bladed moving wheel, i.e. a single stage, of the axial wheel type.

6. Rotorcraft (10) according to any one of Claims 1 to 5, in which the external compressor (19) comprises a bladed moving wheel and a device for varying the orientation of the blades.

7. Rotorcraft (10) according to any one of Claims 1 or 3 to 6, in which the external compressor (19) is arranged to be driven with the aid of an electric motor powered, via an alternator and a battery, via the transmission mechanism (MGB), and in which the external compressor (19) comprises a device for varying its speed of rotation.

8. Rotorcraft (10) according to any one of the preceding claims, in which the external compressor (19) is situated in front of the transmission mechanism (MGB), with reference to the forward direction of the rotorcraft (10).

9. Rotorcraft (10) according to any one of the preceding claims, in which the external compressor (19) is situated behind the MGB mechanism, with reference to the forward direction of the rotorcraft.

10. Rotorcraft (19)[sic] according to any one of the preceding claims, comprising two turbine engines (13) and a single external compressor (19) delivering pressurised air to these two turbine engines.

11. Rotorcraft (10) according to any one of Claims 1 to 9, comprising two turbine engines (13) and two external compressors (19) feeding respective ones of these two turbine engines.

12. Rotorcraft (10) according to any one of the preceding claims, comprising two turbine engines, and in which the air compressed by the external compressor(s) can be delivered to both turbine engines or else to only one of them.

13. Rotorcraft according to Claim 12, comprising a motor-driven damper disposed in the air-transporting duct(s) connecting the external compressor(s) to the turbine engines.

14. Rotorcraft (10) according to Claim 11, in which the external compressors (19) are situated on either side of the transmission mechanism (MGB).

15. Rotorcraft (10) according to any one of Claims 1 to 4 or 6 to 14, in which the external compressor (19) comprises a plurality of moving wheels.

## Patentansprüche

1. Drehflügelflugzeug (10) mit einem Hauptrotor (11), einem Turbotriebwerk (13) mit mindestens einer Leistungsturbine (132), die über eine Welle (15, 15a, 15b, 16, 18) mit einem Getriebemechanismus (BTP) verbunden ist und mit einem Lufteingang (22) versehen ist, wobei der Getriebemechanismus (BTP) mit dem Rotor (11) sowie mit dem Turbotriebwerk (13) verbunden ist, um den Antrieb des Rotors durch das Turbotriebwerk (13) zu ermöglichen,
**dadurch gekennzeichnet, dass**
der Luftdruck am Lufteingang (22) mit einem externen Kompressor (19) erhöht wird, der außerhalb des Turbotriebwerks (13) angeordnet ist und der so eingerichtet ist, dass er von dem Getriebemechanismus (BTP) angetrieben wird, das heißt über eine Welle (191), die durch den Getriebemechanismus (BTP) bewegt wird, welcher wiederum von der Leistungsturbine (132) oder durch einen Elektromotor angetrieben wird, der durch den Getriebemechanismus über einen Generator und eine Batterie mit Energie versorgt wird, wohingegen nur eine Lufttransportleitung (21) den externen Kompressor (19) mit dem Turbotriebwerk verbindet, um durch den externen Kompressor (19) komprimierte Luft an den Eingang (22) des Turbotriebwerks zu liefern.

2. Drehflügelflugzeug (10) nach Anspruch 1, bei dem der externe Kompressor (19) so eingerichtet ist, dass er mit der Leistungsturbine (132) angetrieben wird, unter Zwischenschaltung eines Reduktionsgetriebes (135), einer Welle (15, 15a, 15b, 16, 36) und des Getriebemechanismus (BTP).

3. Drehflügelflugzeug (10) nach Anspruch 1 oder 2, das ferner einen in der Lufttransportleitung (21) angeordneten Wärmetauscher (20) zwischen dem externen Kompressor (19) und dem Turbotriebwerk (13) aufweist, der mit einem Kreis zum Transportieren von Fluid verbunden ist, um die von dem externen Kompressor (19) komprimierte Luft (26) zu kühlen.

4. Drehflügelflugzeug (10) nach einem der Ansprüche 1 bis 3, bei dem der externe Kompressor (149) unter normalen Temperatur- und Druckbedingungen bei seiner Nenndrehzahl ein Kompressionsverhältnis zwischen 1,01 und ungefähr 2, insbesondere zwischen 1,05 und ungefähr 1,5, aufweist.

5. Drehflügelflugzeug (10) nach einem der Ansprüche 1 bis 4, bei dem der externe Kompressor (19) ein einziges bewegliches Schaufelrad aufweist, d.h. eine einzige Kompressoretage, wobei das Rad ein axiales Rad ist.

6. Drehflügelflugzeug (10) nach einem der Ansprüche 1 bis 5, bei dem der externe Kompressor (19) ein bewegliches Flügelrad und eine Vorrichtung zur Veränderung der Orientierung der Flügel aufweist.

7. Drehflügelflugzeug (10) nach einem der Ansprüche 1 oder 3 bis 6, bei dem der externe Kompressor (19) eingerichtet ist, um mit Hilfe eines Elektromotors angetrieben zu werden, der über einen Wechselrichter und eine Batterie unter Zwischenschaltung des Getriebemechanismus (BTP) gespeist wird und bei dem der externe Kompressor (19) eine Vorrichtung zur Veränderung seiner Drehgeschwindigkeit aufweist.

8. Drehflügelflugzeug (10) nach einem der vorstehenden Ansprüche, bei dem der externe Kompressor (19) vor dem Getriebemechanismus (BTP) bezogen auf die Bewegungsrichtung des Drehflügelflugzeugs (10) angeordnet ist.

9. Drehflügelflugzeug (10) nach einem der vorstehenden Ansprüche, bei dem der externe Kompressor (19) hinter dem Getriebemechanismus (BTP) bezogen auf die Bewegungsrichtung des Drehflügelflugzeugs angeordnet ist.

10. Drehflügelflugzeug (10) nach einem der vorstehenden Ansprüche mit zwei Turbotriebwerken (13) und einem einzigen externen Kompressor (19), der diese beiden Turbotriebwerke mit Pressluft versorgt.

11. Drehflügelflugzeug (10) nach einem der Ansprüche 1 bis 9, mit zwei Turbotriebwerken (13) und zwei externen Kompressoren (19), die jeweils einen der beiden Turbotriebwerke speisen.

12. Drehflügelflugzeug (10) nach einem der vorstehenden Ansprüche mit zwei Turbotriebwerken, wobei komprimierte Luft, die von dem oder den externen Kompressor oder Kompressoren komprimiert wird, an beide oder an nur eines der beiden Turbotriebwerke geliefert wird.

13. Drehflügelflugzeug nach Anspruch 12, das mit einem angetriebenen Rapportgetriebe versehen ist, welches in der Lufttransportleitung bzw. den Lufttransportleitungen angeordnet ist, die den oder die externen Kompressoren mit den Turbotriebwerken verbinden.

14. Drehflügelflugzeug (10) nach Anspruch 11, bei dem die externen Kompressoren (19) zu beiden Seiten des Getriebemechanismus (BTP) angeordnet sind.

15. Drehflügelflugzeug (10) nach einem der Ansprüche 1 bis 4 oder 6 bis 14, bei dem der externe Kompressor (19) mehrere bewegliche Räder aufweist.
